# EUROPÄISCHE PATENTANMELDUNG

(11) **EP 4 545 257 A2**
(43) Veröffentlichungstag der Anmeldung: **30.04.2025**
(21) Anmeldenummer: 25163401.0
(22) Anmeldetag: 16.12.2022
(51) Int. Cl.: B25J 15/02

(54) **VERFAHREN UND ÜBERGABEEINRICHTUNG ZUR ÜBERGABE VON PRODUKTEN VON EINER ERSTEN FÖRDEREINRICHTUNG ZU EINER ZWEITEN FÖRDEREINRICHTUNG**

(62) Teilanmeldung aus: 22214086.5
(71) Anmelder: Hastamat Verpackungstechnik GmbH + Co. KG, 35633 Lahnau (DE)
(72) Erfinder: WEIL, Rainer, 35519 Rockenberg (DE); BORNEMANN, Thomas, 35585 Wetzlar (DE)
(74) Vertreter: advotec.

(57) **Zusammenfassung**

Die Erfindung betrifft ein Verfahren und eine Übergabeeinrichtung (10) zur Übergabe von Produkten P von einer ersten Fördereinrichtung (11) zu einer zweiten Fördereinrichtung (12), wobei die Fördereinrichtungen einander kreuzende Förderrichtungen aufweisen, wobei die Übergabe mittels einer Schwenkbewegung erfolgt, bei der eine Produktaufnahme (23) zwischen einer Übernahmeposition II gegenüber der ersten Fördereinrichtung und einer Übergabeposition IV gegenüber der zweiten Fördereinrichtung längs eines Schwenkbogens geführt wird, und während der Schwenkbewegung zunächst eine Verengung und nachfolgend eine Aufweitung eines in der Produktaufnahme gebildeten Produktaufnahmeraums erfolgt, wobei die Verengung des Produktaufnahmeraums durch Verschließen einer Aufnahmeöffnung der Produktaufnahme mittels einer Türeinrichtung mit nachfolgender Bewegung eines der Aufnahmeöffnung gegenüberliegenden Produktaufnahmebodens in Richtung auf die Türeinrichtung erfolgt.

## Beschreibung

Die Erfindung betrifft ein Verfahren zur Übergabe von Produkten von einer ersten Fördereinrichtung zu einer zweiten Fördereinrichtung, wobei die Fördereinrichtungen einander kreuzende Förderrichtungen aufweisen nach dem Oberbegriff des Anspruchs 1, sowie eine entsprechende Übergabeeinrichtung nach dem Oberbegriff des Anspruchs 3.

Verfahren zur Übergabe von Produkten von einer ersten Fördereinrichtung zu einer zweiten Fördereinrichtung kommen insbesondere bei Verpackungsmaschinen zur Anwendung, die nach einer Vereinzelung der in Richtung auf eine Abfülleinrichtung geförderten Produkte eine Richtungsänderung in der Förderung der Produkte notwendig machen, um etwa die Produkte von einer horizontalen Förderrichtung in eine vertikale Förderrichtung zu überführen und eine schwerkraftunterstützte Zuführung der Produkte zu einer Abfülleinrichtung ermöglicht, in der die Produkte mit einer Verpackung versehen werden. Dabei ist die Verpackung regelmäßig an die Form der geförderten Produkte angepasst, was beispielsweise bei Produkten, die eine große Längserstreckung aufweisen dazu führt, dass auch die Verpackung, in die die Produkte in der Abfülleinrichtung abgefüllt werden, eine entsprechend große Längserstreckung aufweist.

Selbst bei solchen Produkten, die, wie etwa sogenannte "Salami-Peitschen", eine Segmentierung aufweisen, und die aufgrund der Segmentierung eine Verpackungsmaterial einsparende Verpackung bei einer Stapel- oder Faltkonfiguration der Salami ermöglichen, erfolgt bislang eine derartige Verpackung nur im Falle einer einfachen Segmentierung, also bei zwei durch eine Verbindungsstelle miteinander verbundenen Segmenten, die in Stapelanordnung aufeinanderliegen. Bei Salami-Peitschen, die mehr als zwei Salami-Segmente und somit mehr als eine Verbindungsstelle zwischen den Salami-Segmenten aufweisen, ist es bislang üblich, dass sie in vollständiger Längserstreckung verpackt werden und daher auch ein Verpackungsmaterial in entsprechender Länge benötigt wird.

Der vorliegenden Erfindung liegt die Aufgabe zugrunde, ein Verfahren sowie eine Vorrichtung vorzuschlagen, dass bzw. die eine beträchtliche Einsparung von Verpackungsmaterial bei der Verpackung von mehrfachsegmentierten Produkten mit großer Längserstreckung, wie beispielsweise eine Salami-Peitsche, ermöglicht.

Zur Lösung dieser Aufgabe weist das erfindungsgemäße Verfahren die Merkmale des Anspruchs 1 auf.

Erfindungsgemäß erfolgt die Übergabe mittels einer Schwenkbewegung, bei der eine Produktaufnahme zwischen einer Übernahmeposition gegenüber der ersten Fördereinrichtung und einer Übergabeposition gegenüber der zweiten Fördereinrichtung längs eines Schwenkbogens geführt wird, und während der Schwenkbewegung zunächst eine Verengung und nachfolgend eine Aufweitung eines in der Produktaufnahme gebildeten Produktaufnahmeraums erfolgt.

Das erfindungsgemäße Verfahren ermöglicht es aufgrund der Produkt-übergabe mittels einer Schwenkbewegung, dass das Produkt bei hinreichend schneller Förderung des Produkts längs eines Schwenkbogens mit Fliehkraft beaufschlagt wird, sodass eine bei Übergabe des Produkts in die Produktaufnahme gefaltete Anordnung des segmentierten Produkts während der Förderung längs des Schwenkbogens bis in die Übergabeposition aufrecht erhalten bleibt, wobei die gefaltete Produktanordnung durch die Verengung des Produktaufnahmeraums zusätzlich zur Fliehkrafteinwirkung noch weiter komprimiert wird und bei Erreichen der Übergabeposition der Kontakt zwischen der Produktaufnahme und dem Produkt durch die Vergrößerung der Produktaufnahme reduziert wird, um eine möglichst kontaktfreie, die komprimierte Faltkonfiguration des Produkts so wenig wie möglich beeinflussende Übergabe mittels der dem Produkt während der Schwenkbewegung in der Produktaufnahme aufgeprägten kinetischen Energie zu ermöglichen.

Das erfindungsgemäße Verfahren ermöglicht es somit, eine Faltkonfiguration des Produkts, die etwa durch ein Aufstauen des längsgestreckten segmentierten Produkts vor der Übernahme in die Produktaufnahme hergestellt werden kann, während der Übergabe von der ersten Fördereinrichtung an die etwa als Abfüllrohr ausgebildete, zur Abfülleinrichtung führende zweite Fördereinrichtung nicht nur aufrechtzuerhalten, sondern darüber hinaus auch durch die während der Schwenkbewegung erfolgende Verengung des Produktaufnahmeraums der Produktaufnahme weiter zu komprimieren. Aufgrund der die komprimierte Faltkonfiguration möglichst wenig störende Übergabe durch Aufweitung der Produktaufnahme vor der Übergabe des Produkts an die zweite Fördereinrichtung ist es möglich, die komprimierten Faltkonfiguration auch während der Abfüllung des Produkts in die Verpackung aufrechtzuerhalten, sodass für eine Verpackung nur eine entsprechend geringe Menge an Verpackungsmaterial erforderlich ist, verglichen mit der Menge an Verpackungsmaterial, die erforderlich wäre, um das segmentierte Produkt in Längserstreckung aufzunehmen.

Erfindungsgemäß erfolgt die Verengung des Produktaufnahmeraums durch Verschließen einer Aufnahmeöffnung der Produktaufnahme mittels einer Türeinrichtung mit nachfolgender Bewegung eines der Aufnahmeöffnung gegenüberliegenden Produktaufnahmebodens in Richtung auf die Türeinrichtung, sodass nach Übernahme des Produkts in die Produktaufnahme eine von zwei einander gegenüberliegenden Seiten der Produktaufnahme ausgeführte räumliche Verengung der Produktaufnahme erfolgt.

Vorzugsweise erfolgt die Aufweitung des Produktaufnahmeraums durch Rückstellung des Produktaufnahmebodens mit nachfolgender Öffnung der Türeinrichtung, sodass der komprimierende Effekt der Fliehkraft auf das Produkt solange wie möglich bis unmittelbar vor Übergabe des Produkts an die zweite Fördereinrichtung aufrechterhalten werden kann.

Zur Lösung der Aufgabe weist die erfindungsgemäße Übergabeeinrichtung die Merkmale des Anspruchs 3 auf.

Erfindungsgemäß ist die Übergabeeinrichtung zur Übergabe von Produkten von einer ersten Fördereinrichtung zu einer zweiten Fördereinrichtung als Schwenkförderer ausgebildet mit einem an einer Schwenkachse schwenkbar gelagerten Schwenkhebel, der mit einer Produktaufnahme versehen ist zur Übernahme eines Produkts von der ersten Fördereinrichtung und Übergabe des Produkts an die zweite Fördereinrichtung mittels einer zwischen den Fördereinrichtungen ausgeführten Schwenkbewegung, wobei die Produktaufnahme eine Komprimierungseinrichtung zur Verengung eines in der Produktaufnahme ausgebildeten Produktaufnahmeraums aufweist.

Erfindungsgemäß ist zur Ausbildung der Komprimierungseinrichtung ein gegenüber der Aufnahmeöffnung angeordneter Schalenboden zumindest teilweise in Richtung der Aufnahmeöffnung verstellbar, sodass die Komprimierung in Richtung der durch die Schwenkbewegung erzeugten Fliehkraft wirkt.

Nachfolgend wird eine bevorzugte Ausführungsform der Erfindung anhand der Zeichnungen näher erläutert.

Es zeigen:
- **Fig. 1**: Eine im Übergang zwischen einer ersten Fördereinrichtung und einer zweiten Fördereinrichtung angeordnete Übergabeeinrichtung mit zwei Produktaufnahmen in Frontansicht;
- **Fig. 2**: die in **Fig. 1** dargestellte Übergabeeinrichtung in seitlicher Ansicht mit Darstellung eines Schwenkförderers mit den an Schwenkhebeln angeordneten Produktaufnahmen;
- **Fig. 3**: die in den **Fig. 1** und **2** dargestellte Übergabeeinrichtung in perspektivischer Ansicht;
- **Fig. 4**: eine Schnittansicht der in **Fig. 1** dargestellten Übergabeeinrichtung gemäß Schnittlinienverlauf IV-IV;
- **Fig. 5**: einen mit einer Produktaufnahme versehenen Schwenkhebel des Schwenkförderers in Einzeldarstellung;
- **Fig. 6**: eine schematische Darstellung der Schwenkbewegungen einer Produktaufnahme in Draufsicht.

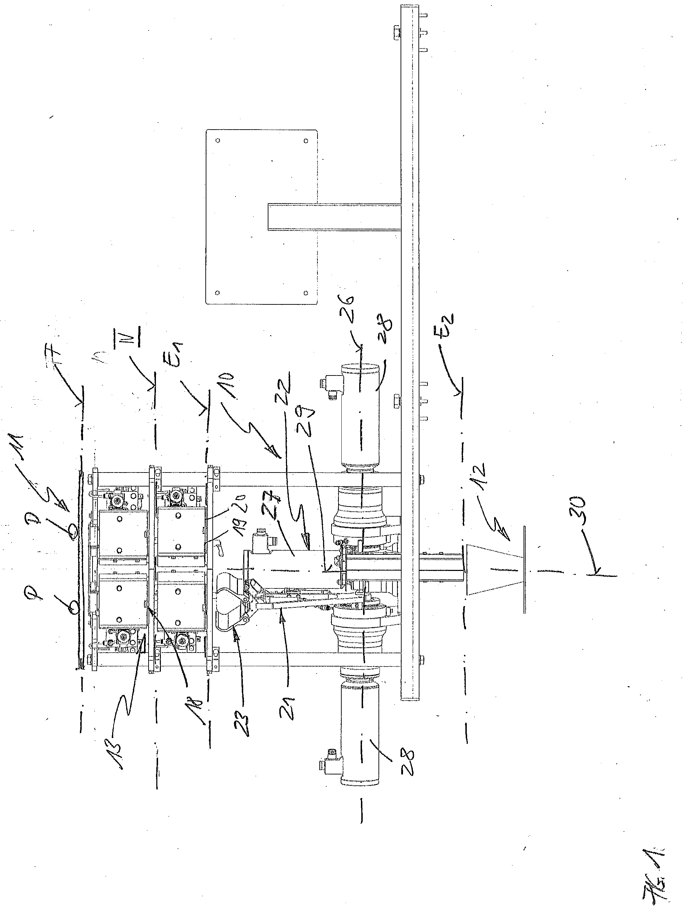

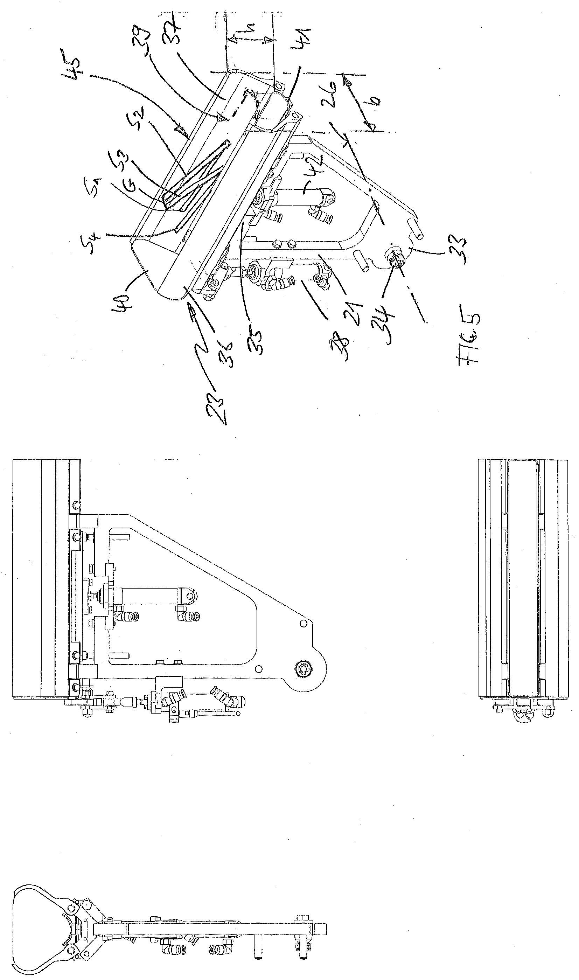

Die **Fign. 1** bis **3** zeigen eine Übergabeeinrichtung 10, die im Fall des vorliegenden Ausführungsbeispiels in Produktförderrichtung zwischen einer als horizontaler Bandförderer ausgebildeten ersten Fördereinrichtung 11 und einer als Füllrohr einer Abfülleinrichtung ausgebildeten Fördereinrichtung 12 angeordnet ist. Mittels der Fördereinrichtung 11 werden einer oberhalb der Übergabeeinrichtung 10 angeordneten, als Kaskadenbehälter 13 ausgebildeten Vereinzelungseinrichtung Produkte P zugeführt, die längs zweier im Wesentlichen parallelen Förderlinien 14, 15 auf der Fördereinrichtung 11 der Übergabeeinrichtung 10 zugefördert werden. Bei den Produkten P handelt es sich im vorliegenden Fall um sogenannte "Salami-Peitschen", also segmentierte Wursterzeugnisse, die, wie beispielhaft in **Fig. 5** dargestellt, vier Salamisegmente S₁, S₂, S₃ und S₄ aufweisen, die jeweils im Wesentlichen starr ausgebildet und über aus der Wurstpelle gebildete scharnierartige Gelenke G miteinander verbunden sind.

Während der Förderung auf der Fördereinrichtung 11 weisen die Produkte P eine durch die Herstellung bedingte, im Wesentlichen geradlinig ausgebildete Längserstreckung auf, wobei die Produkte P an einer Absturzkante 44 der Fördereinrichtung 11 jeweils in einen oberen Behälter 16 des Kaskadenbehälters 13 stürzen, sodass die Segmente S₁, S₂, S₃ und S₄ aus der während der kontinuierlichen Förderung auf der Fördereinrichtung 11 gebildeten Reihenanordnung in eine Konfiguration überführt werden, in der die Segmente S₁, S₂, S₃ und S₄ im Wesentlichen regellos nebeneinander angeordnet sind, wie etwa in **Fig. 5** dargestellt.

Die oberen Behälter 16 des Kaskadenbehälters 13 weisen genauso wie untere Behälter 17 des Kaskadenbehälters 13 eine Bodenklappe 18 mit jeweils zwei, in **Fig. 1** mit gestricheltem Linienverlauf dargestellten, verschwenkbaren Klappenflügeln 19, 20 auf, derart, dass nach einer Öffnung der Klappenflügel 19, 20 die jeweils in den oberen Behältern 16 aufgenommenen Produkte P zunächst in die unteren Behälter 17 gelangen, wo sie sich unmittelbar oberhalb der Übergabeeinrichtung 10 befinden.

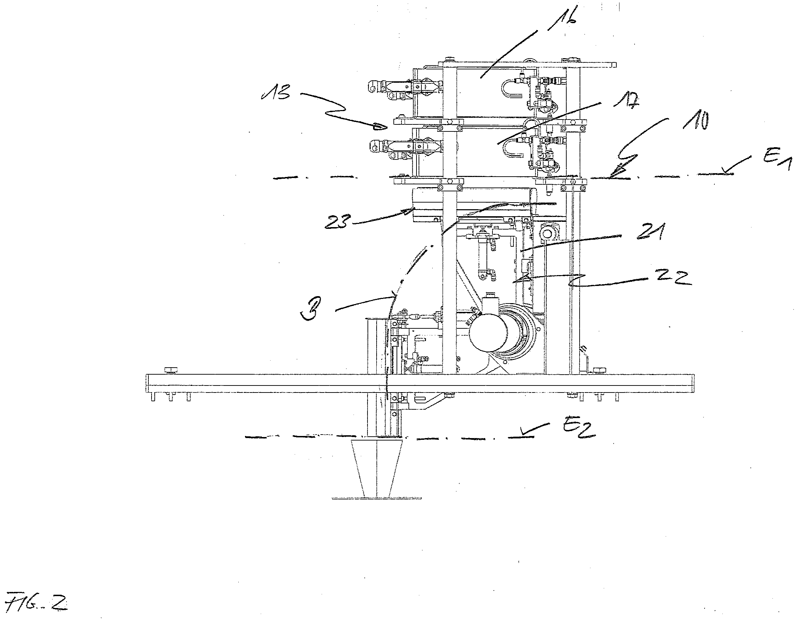

Wie aus einer Zusammenschau der **Fign. 1** und **2** ersichtlich, sind die Behälter 16 und die Behälter 17 unter einem größer werdenden Winkel zueinander angeordnet, um einen zunehmenden horizontalen Abstand zwischen den Produkten P vor Übergabe an die Übergabeeinrichtung 10 zu erzielen. Grundsätzlich dient der Kaskadenbehälter 13 dazu, nach einer Vereinzelung der Produkte P in den oberen Behältern 16 durch die unteren Behälter eine getaktete Übernahme der Produkte P durch die Übergabeeinrichtung 10 zu ermöglichen.

Wenn die Produkte aus den oberen Behältern 16 nach Öffnung der Bodenklappen 18 in die unteren Behälter 17 gelangt sind, befinden sie sich in einer Übernahmeebene E₁ oberhalb der Übergabeeinrichtung 10 und können von jeweils einer an einem Schwenkhebel 21 eines Schwenkförderers 22 der Übergabeeinrichtung 10 angeordneten Produktaufnahme 23 übernommen werden. Hierzu erfolgt eine Öffnung der Bodenklappen 18 der unteren Behälter 17 entsprechend einem durch den Schwenkförderer 22 vorgegebenen Takt immer dann, wenn sich eine der beiden an den Schwenkhebeln 21 des Schwenkförderers 22 angeordneten Produktaufnahmen 23 unter dem jeweiligen unteren Behälters 17 befindet.

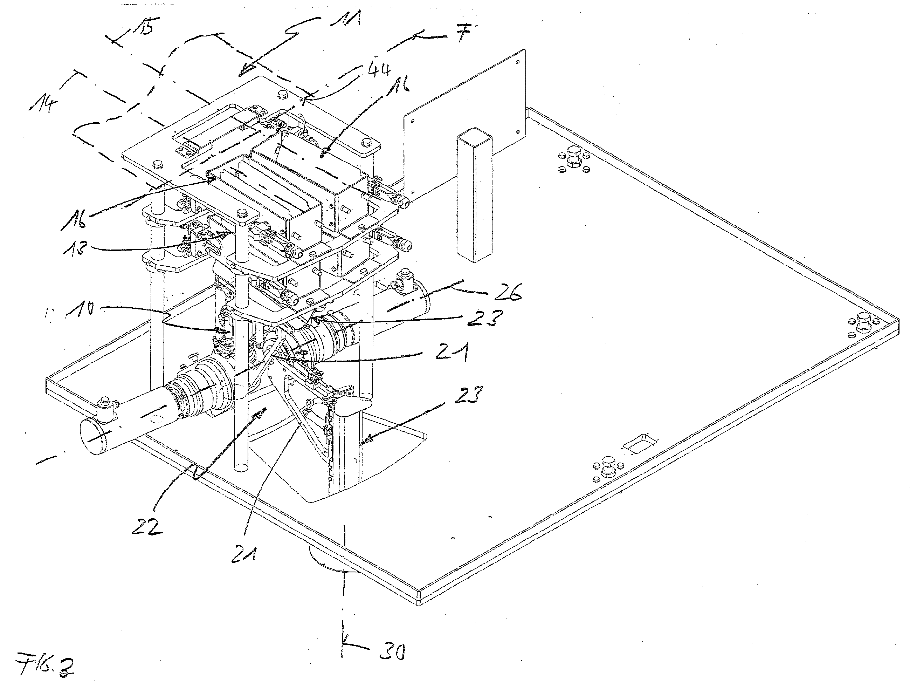

Wie insbesondere aus den **Fig. 1** und **3** ersichtlich, sind die Schwenkhebel 21 des Schwenkförderers 22 auf einer gemeinsamen ersten Schwenkachse 26 angeordnet, die parallel zur Förderebene F und parallel zur Übernahmeebene E₁ angeordnet ist und mittels eines Drehantriebs 29 um eine orthogonal zur Förderebene F bzw. Übernahmeebene E₁ angeordnete zweite Schwenkachse 27 verschwenkbar ist. Die Schwenkhebel 21 werden jeweils von einem auf der Schwenkachse 26 angeordneten Drehantrieb 28 unabhängig voneinander angetrieben, derart, dass die Produktaufnahmen 23 längs eines Schwenkbogens B unabhängig voneinander zwischen der Übernahmeebene E₁ und einer in den **Fign. 1** und **2** dargestellten Übergabeebene E₂ geführt werden.

Die Darstellung der Übergabeeinrichtung in **Fig. 1** zeigt die Anordnung der ersten, hier als Bandförderer ausgebildeten Fördereinrichtung 11 und der zweiten, hier als Füllrohr einer Abfülleinrichtung ausgebildeten Fördereinrichtung 12 mit einander kreuzenden Förderrichtungen, wobei im vorliegenden Fall mittels der ersten Fördereinrichtung 11 eine horizontale Förderrichtung zur Übergabeeinrichtung 10 hin und mittels der zweiten Fördereinrichtung 12 eine zur ersten Förderrichtung 11 orthogonale Förderrichtung definiert wird. Bei dem dargestellten Ausführungsbeispiel weist die erste Förderrichtung 11 zwei nebeneinander in einer gemeinsamen Förderebene F ausgebildete Förderlinien 14, 15 auf, längs denen die Produkte P jeweils in Reihenanordnung gefördert werden, wobei die zweite als Füllrohr ausgebildete Fördereinrichtung 12 lediglich eine Förderlinie 30 definiert, längs der nach Übergabe der Produkte P aus den Produktaufnahmen 23 in das Füllrohr eine Förderung erfolgt und die in der Mitte zwischen den Förderlinien 14, 15 angeordnet ist.

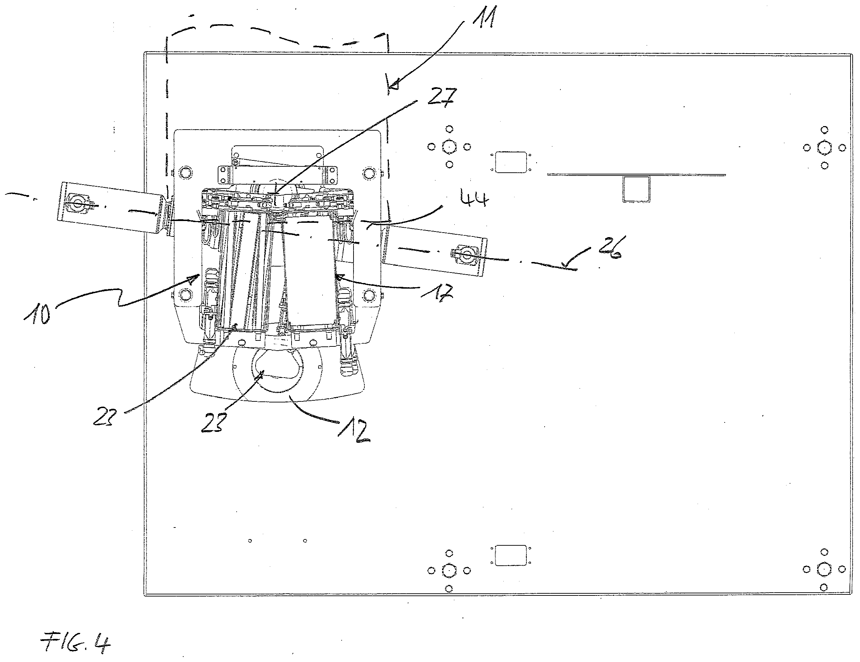

Wie insbesondere **Fig. 4** zeigt, ist sowohl zur Übernahme der Produkte P aus den unteren Behältern 17 des Kaskadenbehälters 13 in der Übernahmeebene E₁ als auch zur Übergabe der Produkte P aus den Produktaufnahmen 23 in die als Füllrohr ausgebildete Fördereinreichung 12 in der Übergabeebene E₂ ist daher ein horizontales Verschwenken der Schwenkachse 26 um die orthogonale Schwenkachse 27 notwendig, um in der Übernahmeebene E₁ eine überdeckende Anordnung der Behälter 17 mit den Produktaufnahmen 23 und in der Übergabeebene E₂ eine überdeckende Anordnung der Produktaufnahmen 23 mit der hier als Füllrohr ausgebildeten Fördereinrichtung 12 zu ermöglichen.

In den **Fig. 1** bis **4** ist der Schwenkförderer 22 in einer Konfiguration dargestellt, in der die linke Produktaufnahme 23 in der Übernahmeebene E₁ angeordnet ist und sich die rechte Produktaufnahme 23 in der Übergabeebene E₂ befindet. Wie **Fig. 5** zeigt, ist die Produktaufnahme 23 an einem auf der Gelenkachse 26 angeordneten Antriebsende 33 mit einem Antriebszapfen 34 versehen, der zur kraftschlüssigen Verbindung mit dem in **Fig. 1** dargestellten Drehantrieb 28 dient. Ein dem Antriebsende 33 gegenüberliegendes Hebelende 35 ist mit der Produktaufnahme 23 versehen, die als Produktschale ausgebildet ist mit einander gegenüberliegenden Schalenwänden 36, 37, die über einen, hier pneumatisch angetriebenen Aktuator 38, der am Schwenkhebel 21 angeordnet ist, gegeneinander verschwenkbar sind, derart, dass ein innerhalb der Produktaufnahme 23 ausgebildeter Produktaufnahmeraum 39 in seiner Breite b vergrößert oder verkleinert werden kann, wobei die Schalenwände 36, 37 an einem das hintere Ende der Produktaufnahme 23 ausbildenden Mitnehmerwand 40 vorbei bewegt werden.

Wie **Fig. 5** weiter zeigt, ist die Produktaufnahme 23 mit einem Schalenboden 41 versehen, der mittels eines ebenfalls am Schwenkhebel 21 installierten weiteren Aktuators 42 zwischen einer in **Fig. 5** dargestellten unteren Position und einer in **Fig. 5** mit strichpunktiertem Linienverlauf dargestellten oberen Position verstellbar ist, so dass neben der Breite b auch die Höhe h des Produktaufnahmeraums 3 veränderbar ist.

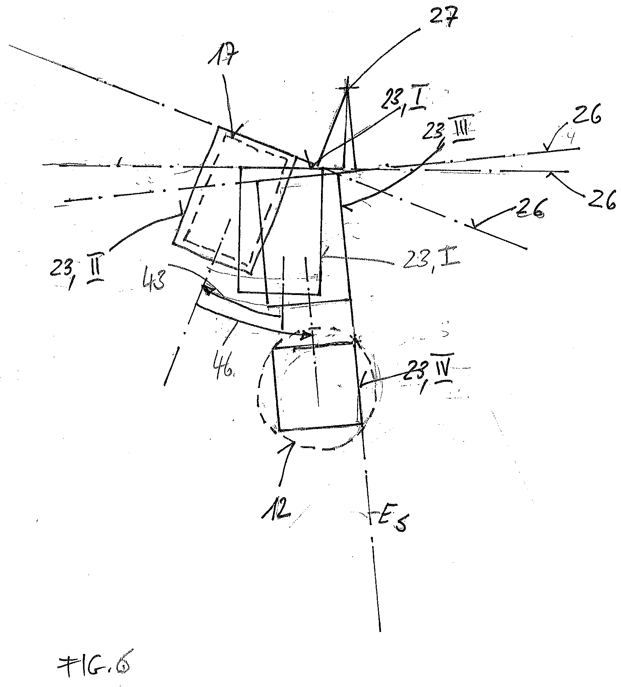

Wie in **Fig. 6** am Beispiel der linken Produktaufnahme 32 schematisch dargestellt, erfolgt bei Inbetriebnahme der Übergabeeinrichtung 10 ausgehend von einer Ausgangsposition I der Produktaufnahme 23 zunächst ein Verschwenken 43 des Schwenkförderers 22 um die orthogonale Schwenkachse 27, so dass sich die Produktaufnahme 23 in einer in den **Fign. 1** bis **4** dargestellten Übernahmeposition II befindet, in der die Produktaufnahme 23 von dem Behälter 17 überdeckt wird, eine von den Schalenwänden 36, 37 gebildete Türeinrichtung 45 der Produktaufnahme 23 sich in geöffneter Stellung befindet und der Schalenboden 41 in seiner unteren Position angeordnet ist. Damit befindet sich die Produktaufnahme 23 in der maximal aufgeweiteten Konfiguration, so dass nach Öffnung der Bodenklappe 18 des Behälters 17 das Produkt P übernommen werden kann.

Nachfolgend erfolgt ein entgegengesetztes Verschwenken 46 um die orthogonale Schwenkachse 27, derart, dass sich die Produktaufnahme 23 und die durch das Füllrohr gebildete zweite Fördereinrichtung 12 in einer gemeinsamen orthogonalen Schwenkebene E_{S} befinden.

Während der Schwenkbewegung der Produktaufnahme 23 in der Übernahmeebene E₁ aus der Position II in die Position III werden die Schalenwände 36, 37 zum Schließen der Türeinrichtung 45 gegeneinander verschwenkt, wobei gleichzeitig oder nach Erreichen der Position III eine Verstellung des Schalenbodens 41 in seine obere Position (siehe **Fig.5**) erfolgt, so dass der mittels des Aktuators 42 verstellbare Schalenboden 41 eine Komprimierungseinrichtung 47 ausbildet und das in **Fig. 5** innerhalb des geweiteten Produktaufnahmeraums 39 dargestellte Produkt P komprimiert wird, mit der Folge, dass die Produktsegmente S₁ bis S₄ in eine mehr oder weniger parallele und dichter beabstandete Anordnung überführt werden, also das Produktvolumen wesentlich verringert wird.

Ausgehend von der verengten Konfiguration der Produktaufnahme 39 in der Position III der Produktaufnahme 23 erfolgt nun ein Verschwenken der Produktaufnahme 23 längs eines in der Schwenkebene E_{S} ausgebildeten Schwenkbogens B (**Fig. 2**), während der das Produkt P beschleunigt wird und aufgrund der während der Schwenkbewegung auf das Produkt wirkenden Fliehkraft die komprimierte Konfiguration beibehält, so dass der Schalenboden 41 wieder in seine untere Position zurückbewegt werden kann, um den Produktaufnahmeraum 39 für eine Übergabe des Produkts P in die vom Füllrohr ausgebildete zweite Fördereinrichtung 12 nach einem Abstoppen der Schwenkbewegung nach Erreichen der Übergabeposition IV der Produktaufnahme 23 in der Produktübergabeebene E₂ zu ermöglichen.

Kurz vor Erreichen der Übergabeposition IV der Produktaufnahme 23 wird die Türeinrichtung 45 durch Aufschwenken der Schalenwände 36, 37 geöffnet, so dass das Produkt P unmittelbar vor Übergabe in das Füllrohr im Wesentlichen nur noch über die Mitnehmerwand 40 Körperkontakt zur Produktaufnahme 23 hat und die dem Produkt P während der Schwenkbewegung in der orthogonalen Schwenkebene E_{S} in der Produktaufnahme 23 aufgeprägte kinetische Energie im Wesentlichen uneingeschränkt für einen Abwurf des Produkts in das Füllrohr zur Verfügung steht.

Nach Abwurf bzw. Übergabe des Produkts aus der Produktaufnahme 23 wird diese mit einander überlagerten Schwenkbewegungen um die Schwenkachsen 26 und 27 wieder in die Übernahmeposition II in der Übernahmeebene E₁ zurückbewegt.

Während sich die linke Produktaufnahme 23 in der Übergabeposition IV befindet, erfolgt eine Befüllung der rechten Produktaufnahme, so dass diese während der Rückbewegung der linken Produktaufnahme 23 in die Übernahmeebene E₁ eine zur Schwenkbewegung der linken Produktaufnahme 23 gegensinnige Schwenkbewegung in die Übergabeposition in der Übergabeebene E₂ ausführt.

Dadurch, dass die linke und rechte Produktaufnahme 23 abwechselnd jeweils zwischen einer Übernahmeposition II zur Übernahme eines Produkts P von einer Förderlinie 14 bzw. 15 und einer Übergabeposition IV zur Übergabe des Produkts P an die von dem Füllrohr gebildete Fördereinrichtung 12 verschwenkt werden, derart, dass sich eine Produktaufnahme 23 in der Übernahmeposition II befindet, während die andere in der Übergabeposition IV angeordnet ist, kann eine der zweiten Fördereinrichtung 12 nachgeordnete Abfülleinrichtung im Wesentlichen kontinuierlich betrieben werden.

## Patentansprüche

1. Verfahren zur Übergabe von Produkten P von einer ersten Fördereinrichtung (11) zu einer zweiten Fördereinrichtung (12), wobei die Fördereinrichtungen (11, 12) einander kreuzende Förderrichtungen aufweisen, wobei die Übergabe mittels einer Schwenkbewegung erfolgt, bei der eine Produktaufnahme (23) zwischen einer Übernahmeposition II gegenüber der ersten Fördereinrichtung (11) und einer Übergabeposition IV gegenüber der zweiten Fördereinrichtung (12) längs eines Schwenkbogens geführt wird, und während der Schwenkbewegung zunächst eine Verengung und nachfolgend eine Aufweitung eines in der Produktaufnahme (23) gebildeten Produktaufnahmeraums (39) erfolgt,
**dadurch gekennzeichnet,**
**dass** die Verengung des Produktaufnahmeraums (39) durch Verschließen einer Aufnahmeöffnung der Produktaufnahme (23) mittels einer Türeinrichtung (45) mit nachfolgender Bewegung eines der Aufnahmeöffnung gegenüberliegenden Produktaufnahmebodens in Richtung auf die Türeinrichtung (45) erfolgt.

2. Verfahren nach Anspruch 1,
**dadurch gekennzeichnet,**
**dass** die Aufweitung des Produktaufnahmeraums (39) durch Rückstellung des Produktaufnahmebodens mit nachfolgender Öffnung der Türeinrichtung (45) erfolgt.

3. Übergabeeinrichtung (10) zur Übergabe von Produkten P von einer ersten Fördereinrichtung (11) zu einer zweiten Fördereinrichtung (12), wobei die Fördereinrichtungen (11,12) einander kreuzende Förderrichtungen aufweisen, wobei die Übergabeeinrichtung (10) einen Schwenkförderer (22) aufweist mit einem an einer Schwenkachse (26) schwenkbar gelagerten Schwenkhebel (21), der mit einer Produktaufnahme (23) versehen ist zur Übernahme eines Produkts P von der ersten Fördereinrichtung (11) und Übergabe des Produkts P an die zweite Fördereinrichtung (12) mit Ausführung einer Schwenkbewegung zwischen den Fördereinrichtungen (11, 12), wobei die Produktaufnahme (23) eine Komprimierungseinrichtung (47) zur Verengung eines in der Produktaufnahme (23) ausgebildeten Produktaufnahmeraums (39) aufweist,
**dadurch gekennzeichnet,**
**dass** zur Ausbildung der Komprimierungseinrichtung (47) ein gegenüberliegend der Aufnahmeöffnung angeordneter Schalenboden (41) zumindest teilweise in Richtung der Aufnahmeöffnung verstellbar ist.
